# EUROPÄISCHE PATENTSCHRIFT

(11) **EP 2 028 057 B1**
(45) Veröffentlichungstag und Bekanntmachung des Hinweises auf die Patenterteilung: **26.10.2011**
(21) Anmeldenummer: 08012737.6
(22) Anmeldetag: 15.07.2008
(51) Int. Cl.: B60R 16/023, G08G 1/0968, G06Q 10/00

(54) **Kraftfahrzeug mit einer aus einer Änderung der Fahrgeschwindigkeit resultierenden Änderung der Ankunftszeit/Fahrdauer und des Kraftstoffverbrauchs**
Motor vehicle with an arrival time/journey duration and fuel usage that alter as a result of changes in drive speed
Véhicule automobile doté d'une modification du moment d'arrivée/durée de conduite et de la consommation de carburant résultant de la modification de la vitesse de conduite

(30) Priorität: 24.08.2007 DE 202007011919 U
(43) Veröffentlichungstag der Anmeldung: 25.02.2009
(73) Patentinhaber: Audi AG, 85045 Ingolstadt (DE)
(72) Erfinder: Burgert, Sascha, 85088 Vohburg (DE); Apel, Frank, 85055 Ingolstadt (DE); Ecard, Karl Bernhard, 89077 Ulm (DE)
(74) Vertreter: Thielmann, Frank

(56) Entgegenhaltungen:
- EP-A1- 1 505 555
- EP-A1- 1 515 122
- DE-A1-102005 003 081
- US-A1- 2003 009 277

## Beschreibung

Die Erfindung betrifft ein Kraftfahrzeug umfassend eine Einrichtung zur Ermittlung der Ankunftszeit an einem oder der Fahrdauer bis zu einem eine bekannte Entfernung entfernten Ort unter Berücksichtigung wenigstens einer Geschwindigkeitsinformation und der Entfernung sowie zur Ausgabe an einer Anzeigeeinrichtung.

Moderne Kraftfahrzeuge verfügen üblicherweise in Kombination mit oder als Funktionalität eines Navigationssystems über eine Möglichkeit, die Ankunftszeit an einem bestimmten, bei Verwendung eines Navigationsgeräts einzugebenden Zielort zu ermitteln. Hierzu berücksichtigt die Ermittlungseinrichtung wenigstens eine Geschwindigkeitsinformation, die bei Verwendung eines Navigationssystems üblicherweise in den auf einem separaten Speichermedium wie einer DVD oder dergleichen abgelegten Navigationsdaten enthalten ist. Die Ermittlungseinrichtung legt dabei entsprechende Konstantgeschwindigkeitsinformationen zu den unterschiedlichen, bis zum vorbekannten Zielort führenden Straßen (Autobahn, Landstraße, Stadtstraße) zugrunde und ermittelt so in brauchbarer Näherung eine Ankunftszeit. Die ermittelte Ankunftszeit wird entsprechend der realen Fahrzeuggeschwindigkeit auf der bisher zurückgelegten Strecke und einer Annahme über den weiteren Geschwindigkeitsverlauf kontinuierlich aktualisiert.

Dokument EP 1 505 555 zeigt eine Einrichtung gemäß dem Oberbegriff des Anspruchs 1.

Dahingehend, wie sich eine Änderung der Geschwindigkeit grundsätzlich auf die Ankunftszeit respektive die Fahrtdauer auswirkt, erhält der Fahrer keinerlei Vorab-Information, auch nicht dahingehend, welche Auswirkung die von ihm beabsichtigterweise gewählte Reisegeschwindigkeit auf den Kraftstoffverbrauch haben kann.

Der Erfindung liegt damit das Problem zugrunde, ein Kraftfahrzeug anzugeben, das neben der Ankunftszeit an einem oder der Fahrdauer bis zu einem Ort weitergehende Informationen für den Fahrer bereithält.

Zur Lösung dieses Problems ist bei einem Kraftfahrzeug der eingangs genannten Art erfindungsgemäß vorgesehen, dass die Einrichtung zur Ermittlung und Ausgabe wenigstens einer weiteren Ankunftszeit oder Fahrdauer oder Zeitdifferenz unter Berücksichtigung wenigstens einer weiteren, zur ersten Geschwindigkeitsinformation unterschiedlichen Geschwindigkeitsinformation sowie zur Ermittlung und Ausgabe des Kraftstoffverbrauchs oder der Verbrauchsdifferenz zum Zurücklegen der Entfernung jeweils unter Berücksichtigung der ersten und der zweiten Geschwindigkeitsinformation ausgebildet ist.

Das erfindungsgemäße Kraftfahrzeug ermittelt nicht nur die Ankunftszeit oder Fahrdauer bezogen auf eine einzige Geschwindigkeitsinformation respektive einen Geschwindigkeitsinformationssatz, soweit dieser definiert beispielsweise aus dem Speichermedium des Navigationssystems erfasst wird, vielmehr bietet die erfindungsgemäße Einrichtung dem Fahrer eine oder mehrere weitere Ankunftszeiten oder Fahrdauern an, die unter Berücksichtigung einer weiteren, zur ersten Geschwindigkeitsinformation unterschiedlichen Geschwindigkeitsinformation ermittelt wurden, wobei unter dem Begriff "Geschwindigkeitsinformation" hier und im Folgenden auch ein Informationskonvolut bestehend aus unterschiedlichen Geschwindigkeiten, die auf Straßen unterschiedlichen Typs gefahren werden dürfen, zu verstehen ist. Die Einrichtung errechnet also unter Zugrundelegung verschiedener Fahrszenarien respektive Geschwindigkeitsszenarien die entsprechenden Ankunftszeiten oder Fahrdauern. Denkbar ist auch, die Zeitdifferenz zu ermitteln und auszugeben, die zwischen der ermittelten Ankunftszeit bzw. Fahrdauer unter Zugrundelegung der ersten Geschwindigkeitsinformation und den Rechenergebnissen unter Zugrundelegung der einen oder mehreren Zeitengeschwindigkeitsinformationen gegeben sind. Wird als zweite Geschwindigkeitsinformation eine höhere Durchschnittsfahrgeschwindigkeit angenommen, so ist die Ankunftszeit früher, die Fahrtdauer kürzer bzw. ergibt sich eine negative Zeitdifferenz. Ist die zweite Geschwindigkeitsinformation eine langsamere als die erste Geschwindigkeitsinformation, so errechnet sich eine spätere Ankunftszeit bzw. eine längere Fahrdauer bzw. ergibt sich eine positive Zeitdifferenz.

Neben der Ermittlung der Ankunftszeit/Fahrdauer/Zeitdifferenz ist die erfindungsgemäß vorgesehene Einrichtung ferner in der Lage, sowohl unter Berücksichtigung der ersten Geschwindigkeitsinformation als auch unter Berücksichtigung der oder jeder weiteren zweiten Geschwindigkeitsinformation den Kraftstoffverbrauch bis zum Zielort zu ermitteln, oder aber eine entsprechende Verbrauchsdifferenz zu ermitteln, und die Ergebnisse zusammen mit den Zeit- oder Dauerergebnissen auszugeben. Die Kraftstoffverbrauchsermittlung erfolgt unter Berücksichtigung wenigstens eines weiteren Betriebsparameters des Fahrzeugs, wobei selbstverständlich die Einrichtung jedweden Betriebsparameter zur Verbrauchsermittlung berücksichtigt, der auch nur einen geringen zweckmäßigen Rechenbeitrag zur Erlangung eines möglichst genauen Ergebnisses liefert, wobei hierunter selbstverständlich auch entsprechende Informationen über Streckenprofil (z.B. flache Strecke oder äußerst hügelige Strecke) mit eingehen können. Solche Informationen gehen selbstverständlich auch in die Berechnung der Ankunftszeit/Fahrdauer/Zeitdifferenz mit ein, wie natürlich auch entsprechende Informationen aus Verkehrsfunk oder dergleichen gegebenenfalls berücksichtigt werden können. Das Fahrzeug kann als Motor eine Brennkraftmaschine aufweisen, so dass der Verbrauchswert den Benzin- oder Dieselverbrauch angibt. Alternativ kann auch ein Elektromotor oder Erdgasmotor oder Wasserstoffantrieb vorgesehen sein, so dass der Begriff "Kraftstoffverbrauch" je nach Motorentyp die elektrische Leistungsaufnahme oder den Stromverbrauch, oder den Verbrauch an Erdgas oder Wasserstoff angibt. Nachfolgend wird allgemein von "Kraftstoff" gesprochen.

Der Fahrer erhält in jedem Fall ein Informationskonvolut angezeigt, das ein anderes Geschwindigkeitsszenario abbildet, als es der ersten Berechnung zugrunde liegt. An den ermittelten und ausgegebenen Informationen kann der Fahrer sofort erkennen, wie sich eine Veränderung der Durchschnittsgeschwindigkeit auf die Ankunftszeit/Fahrdauer auswirkt, respektive auf den Kraftstoffverbrauch. Ist der Fahrer an einem möglichst Kraftstoff sparenden Fahrbetrieb interessiert, so kann er anhand der Informationen sofort erkennen, wie er sich verhalten muss, oder ob seine angedachte Durchschnittsgeschwindigkeit bereits zu einem niedrigen Kraftstoffverbrauch führt. Kommt es dem Fahrer auf eine möglichst zügige Ankunft an, so erkennt er sofort, wie sich eine etwaige Geschwindigkeitserhöhung auswirken kann. Eine Referenzierung beider Informationen ist selbstverständlich ebenfalls möglich, da der Fahrer sofort erkennt, wie sich eine etwaige frühere Ankunftszeit respektive Verkürzung der Fahrdauer auf den Kraftstoffverbrauch auswirkt, und umgekehrt.

In Weiterbildung der Erfindung kann vorgesehen sein, dass die Einrichtung zur Ermittlung und Ausgabe wenigstens einer, vorzugweise dreier, weiterer Ankunftszeiten oder Fahrdauern oder Zeitdifferenzen unter Berücksichtigung einer, vorzugsweise dreier, weiterer Geschwindigkeitsinformationen, die höher als die erste Geschwindigkeitsinformation sind, sowie zur Ermittlung und Ausgabe wenigstens einer, vorzugsweise dreier, weiterer Ankunftszeiten oder Fahrdauern oder Zeitdifferenzen unter Berücksichtigung einer, vorzugsweise dreier, weiterer Geschwindigkeitsinformationen, die niedriger als die erste Geschwindigkeitsinformation sind, ausgebildet ist. Ausgehend von einer z.B. aus dem Speichermedium des Navigationssystems abgeleiteten ersten durchschnittlichen Geschwindigkeitsinformation ermittelt die Einrichtung mehrere, vorzugsweise drei, weitere Geschwindigkeits- und Verbrauchszenarien basierend auf entsprechenden höheren und niedrigeren Geschwindigkeitsinformationen. Der Fahrer erhält also als Informationsbasis die gestützt auf die "Ausgangsgeschwindigkeitsinformation" errechneten Informationen, sowie die Informationen zu mehreren niedrigeren und höheren Geschwindigkeiten sowohl hinsichtlich Ankunftszeit/Fahrdauer/Zeitdifferenz als auch Kraftstoffverbrauch/ Verbrauchsdifferenz. Aus dieser Abbildung mehrerer Geschwindigkeitsszenarien kann der Fahrer nun sehr genau erkennen, wie vorteilhaft sich eine etwaige Geschwindigkeitsveränderung im Einzelfall auswirken kann, woraufhin er dann die gewünschte Durchschnittsgeschwindigkeit wählen und sie beispielsweise bei einer längeren Autobahnfahrt in der Geschwindigkeitsregelanlage einprogrammieren kann.

Wie bereits beschrieben, besteht zum einen die Möglichkeit, als Zielort einen über ein Navigationssystem definierten Zielort zu berücksichtigen, das heißt, dass sämtliche Berechnungen hinsichtlich Ankunftszeit/Fahrdauer/ Zeitdifferenz und Kraftstoffverbrauch/Verbrauchsdifferenz bezogen auf die Entfernung zum eingegebenen Zielort ermittelt werden. Alternativ ist es auch bei Fahrzeugen ohne Navigationssystem bzw. bei ausgeschaltetem Navigationssystem denkbar, als Entfernung eine vorbestimmte Entfernung, insbesondere 100 km, zu berücksichtigen. Das heißt, dass sämtliche Ermittlungen auf eine fiktive Entfernung von 100 km berechnet werden. Diese Berechnungen werden fortlaufend aktualisiert, das heißt, dass die Ankunftszeit letztlich kaum variiert, wenn die Geschwindigkeit im Wesentlichen beibehalten wird, anders als im Falle eines Navigationssystembetriebs, bei dem natürlich mit zunehmender Fahrt die Entfernung immer kürzer und folglich die Rechenergebnisse variieren. Die Nutzungsmöglichkeit des erfindungsgemäßen Systems auch bei ausgeschaltetem Navigationssystem, also die Ermittlung bezogen auf eine feste Entfernung von z.B. 100 km, ist für den Fahrer ebenfalls hilfreich, als er die entsprechenden Informationen, die ihm für eine Geschwindigkeitsentscheidung hilfreich sein können, ebenfalls erfassen kann.

Als erste Geschwindigkeitsinformation kann die Ist-Geschwindigkeit oder ein ausgehend von dieser gerundeter Geschwindigkeitswert berücksichtigt werden, ferner ist zweckmäßigerweise der oder jeder weitere berücksichtigte Geschwindigkeitswert einen vorbestimmten Wert, insbesondere 10 km/h, größer oder kleiner als die erste Geschwindigkeitsinformation. Das heißt, dass die einzelnen Geschwindigkeitsinformationen um vorzugsweise 10 km/h gestuft sind, so dass der Fahrer, wenn beispielsweise jeweils drei größere und drei kleinere Geschwindigkeitsinformationen berücksichtigt werden, zu insgesamt sieben Geschwindigkeiten die entsprechenden Informationen ermittelt und angezeigt bekommt. Anstelle der Ist-Geschwindigkeit oder einer gerundeten Geschwindigkeit basierend auf die lst-Geschwindigkeit ist es auch denkbar, die erste Geschwindigkeitsinformation anhand der innerhalb eines zurückliegenden vorbestimmten Zeitintervalls, insbesondere 1 Minute, erfassten Ist-Geschwindigkeiten zu ermitteln, insbesondere in Form einer Durchschnittsgeschwindigkeit. Fährt der Fahrer beispielsweise auf einer Autobahn mit relativ konstanter Geschwindigkeit, so wird die Durchschnittsgeschwindigkeit im Wesentlichen der Ist-Geschwindigkeit entsprechen. Etwaige Geschwindigkeitsvariationen innerhalb dieses Zeitraums werden zum Teil ausgemittelt.

Wie bereits beschrieben, werden zweckmäßigerweise unabhängig vom Betriebsmodus eines vorhandenen Navigationssystems Informationen betreffend die Fahrstrecke, die einem Streckendatenspeicher des Navigationssystems entnehmbar sind oder die in Form von von extern übertragenen Daten (z.B. Verkehrsfunk) vorliegen, seitens der Einrichtung berücksichtigt. Das heißt, dass auf Navigationssystemdaten auch dann zurückgegriffen wird, wenn das Navigationssystem nicht aktiv ist, sondern die Ermittlung bezogen auf eine feste Entfernung von z.B. 100 km berechnet wird. Denn anhand der erfassten Positionsdaten des Fahrzeugs kann aus dem Streckendatenspeicher entnommen werden, dass man auf einer Autobahn fährt, ferner können entsprechende Streckenprofile oder dergleichen berücksichtigt werden, wie auch entsprechende Geschwindigkeitsgebote, Baustellen etc. hierüber erfasst werden können, wenn auch beispielsweise der Verkehrsfunk berücksichtigt wird.

Um zu vermeiden, dass der Fahrer bei einer Fahrt auf einer geschwindigkeitsbegrenzten Straße zum Überschreiten der Grenzgeschwindigkeit aufgrund der errechneten Informationen gestützt auf eine höhere zweite Geschwindigkeitsinformation verleitet wird, ist eine zweckmäßige Erfindungsausgestaltung dahingehend vorgesehen, dass unabhängig vom Betriebsmodus eines vorhandenen Navigationssystems nur solche weiteren Geschwindigkeitsinformationen berücksichtigbar sind, die zulässigerweise auf der befahrenen Straße gefahren werden dürfen. Fährt der Fahrer also auf einer Landstraße und beträgt seine Ist- oder seine Durchschnittsgeschwindigkeit z.B. ca. 90 km/h, so wird als lediglich eine höhere, zweite Geschwindigkeitsinformation eine Durchschnittsgeschwindigkeit von 100 km/h berücksichtigt und die entsprechenden Parameter hierzu ermittelt, höhere Geschwindigkeiten jedoch nicht, um zu vermeiden, dass der Fahrer eine unzulässig hohe Geschwindigkeit fährt. Niedrigere Geschwindigkeiten können selbstverständlich ebenfalls ermittelt werden, wobei beispielsweise auf einer Autobahnfahrt, bei der eine Mindestgeschwindigkeit von 60 km/h gefordert wird, auch dieser Wert nicht unterschritten werden sollte. Auf Autobahnen kann selbstverständlich jede höhere Geschwindigkeit der Berechnung zugrunde gelegt werden, nachdem in vielen Ländern keine Geschwindigkeitsbegrenzung gegeben ist.

An der Anzeigeeinrichtung wird erfindungsgemäß die erste Ankunftszeit oder Fahrdauer, also die Informationen, die zur ersten Geschwindigkeitsinformationen ermittelt wurden, sowie wenigstens eine weitere Ankunftszeit oder Fahrdauer oder Zeitdifferenz gleichzeitig ausgegeben, so dass der Fahrer mehrere Informationen auf einen Blick erkennen kann. Dabei wird zweckmäßigerweise die erste Ankunftszeit oder Fahrdauer optisch kenntlich gemacht, so dass er sehen kann, welche Rechenergebnisse im Moment einschlägig sind. Zweckmäßigerweise werden jedoch neben den Informationen zur ersten Geschwindigkeitsinformation die wenigstens einer niedrigeren zweiten und wenigstens einer höheren zweiten Geschwindigkeitsinformation simultan angezeigt. An der Anzeigeeinrichtung, beispielsweise einem Farbdisplay im Bereich des Kombiinstruments oder einem größeren Display im Bereich des Armaturenbretts, können die anderen noch zusätzlich ermittelten Informationen durch Betätigung eines entsprechenden Betätigungselements, z.B. eines Scrollrads, aufgerufen werden, das heißt, der Fahrer "scrollt" oder "blättert" sich durch die Informationsermittlungsergebnisse. Ist das Display groß genug, können selbstverständlich alle Ergebnisse angezeigt werden.

Denkbar ist es ferner, dass seitens des Fahrers ein Kraftstoffverbrauchswert über ein Eingabemittel eingebbar ist und die Einrichtung zur Ermittlung und Ausgabe eines den Kraftstoffverbrauchswert erreichenden Geschwindigkeitswerts unter Berücksichtigung wenigstens eines Betriebsparameters des Kraftfahrzeugs ausgebildet ist. Der Fahrer kann also beispielsweise einen Wunschverbrauch eingeben, woraufhin die Einrichtung die Durchschnittsgeschwindigkeit unter Berücksichtigung der entsprechenden Informationen ermittelt, die er fahren muss, damit er diesen Kraftstoffverbrauch auch näherungsweise erreicht.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung eines erfindungsgemäßen Kraftfahr- zeugs mit herausgezogener Darstellung der erfindungsgemä- ßen relevanten Komponenten, und
- Fig. 2a - 2c: die Informationendarstellungen an der Anzeigeeinrichtung für unterschiedliche Geschwindigkeitsinformationen.

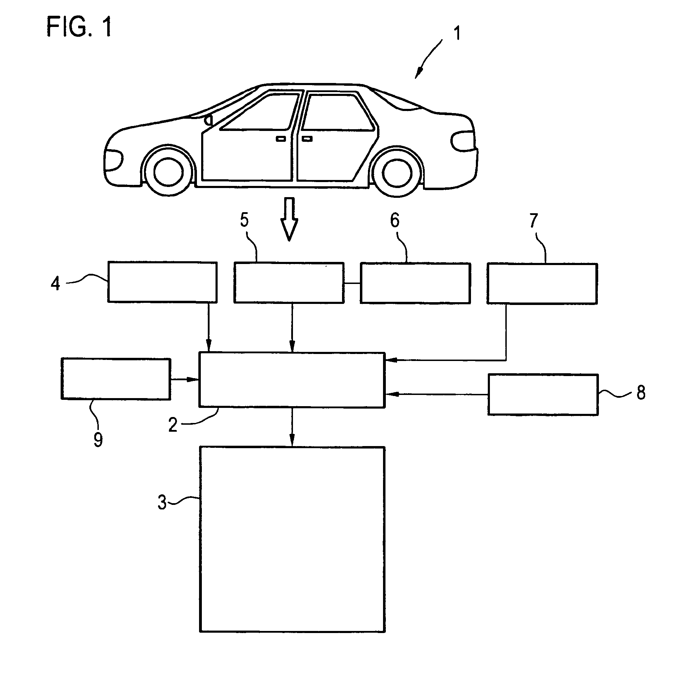

Fig. 1 zeigt ein erfindungsgemäßes Kraftfahrzeug 1, umfassend eine Einrichtung 2, die zur Ermittlung der Ankunftszeit an einem oder der Fahrdauer bis zu einem eine bekannte Entfernung entfernt liegenden Ort unter Berücksichtigung von Geschwindigkeitsinformationen und zur Ausgabe der ermittelten Ergebnisse eine Anzeigeeinrichtung 3, beispielsweise einem Farbdisplay, dient. Zur Ermittlung der Ankunftszeit/Fahrdauer oder einer Zeitdifferenz zwischen unterschiedlich ermittelten Ankunftszeiten oder Fahrdauern greift die Einrichtung 2 auf entsprechende Geschwindigkeitsinformationen und andere Informationen zurück, die üblicherweise auf einem Fahrzeugbus, insbesondere dem CAN-Bus, vorhanden sind, auf welchen Fahrzeugbus sie von den entsprechenden Subsystemen gegeben werden. Gezeigt ist exemplarisch eine Geschwindigkeitserfassungseinrichtung 4, die die Ist-Geschwindigkeit ermittelt und die die Einrichtung 2 erfasst. Diese Geschwindigkeitserfassungseinrichtung kann z.B. ein Geschwindigkeitssensor oder dergleichen sein. Vorgesehen ist ferner ein Navigationssystem 5, dem ein Speichermedium 6 zugeordnet ist, aus dem die Einrichtung 2 entsprechende Streckendaten und sonstige Informationen zu möglichen Durchschnittsgeschwindigkeiten beim Befahren einer Strecke oder dergleichen entnimmt. Das Navigationssystem 5 ist in an sich bekannter Weise zu bedienen, soll es die Zielführung vornehmen, ist ein entsprechender Ort als Ziel einzugeben, bezüglich welchem dann sämtliche Berechnungen hinsichtlich Ankunftszeit/Fahrdauer als auch Kraftstoffverbrauch erfolgen.

Ziff. 7 bezeichnet ein Radio oder anderweitiges Infotainmentsystem, das imstande ist, Verkehrsfunkinformationen zu erfassen, wobei auch diese von der Einrichtung 2 beispielsweise in Form von Stauinformationen oder dergleichen berücksichtigt werden. Die Aufzählung der mit der Einrichtung 2 kommunizierenden Subsysteme ist nicht abschließend, selbstverständlich kann die Einrichtung 2 auf jedweden Betriebsparameter oder Information zurückgreifen, die in irgendeiner Weise zur Ermittlung der Ankunftszeit oder Fahrdauer respektive des Kraftstoffverbrauchs erforderlich ist, wie z.B. Daten des Motors 8 oder seines Motorsteuergeräts, der oder das in Fig. 1 noch gezeigt ist.

Gezeigt ist ferner ein Bedienelement 9, über das der Fahrer die Möglichkeit hat, den Betrieb der Einrichtung 2 zu- oder abzuschalten. An der Anzeigeeinrichtung 3 wird ihm beispielsweise ein Menü verschiedener wählbarer Systemfunktionen angeboten, beispielsweise kann hierüber der Bordcomputer angewählt werden etc. Ein Menüpunkt ist z.B. auch die Funktion der Ermittlungseinrichtung, die der Fahrer über das Bedienelement 9, z.B. eine Taste oder ein Scrollrad, anwählen und aktivieren kann. Sodann arbeitet die Einrichtung und ermittelt die entsprechenden Informationen.

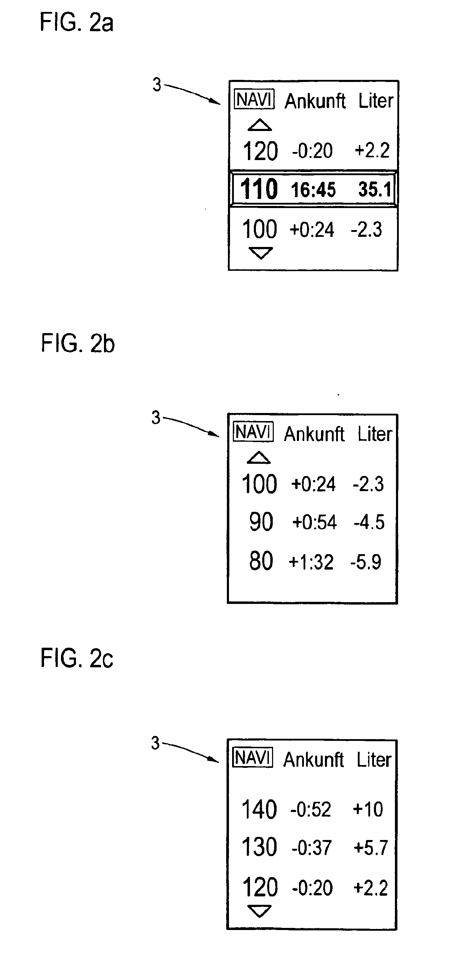

Die Figuren 2a - 2c zeigen die Informationsausgabe an der Anzeigeeinrichtung 3 bezogen auf unterschiedliche der Ermittlung zugrunde gelegte Geschwindigkeitsinformationen.

In den Figuren ist jeweils mit der Angabe "NAVI" angegeben, dass im Navigationssystem 5 ein Zielort hinterlegt wurde, wobei die entsprechenden Ankunfts- oder Verbrauchswerte bezogen bzw. unter Berücksichtigung der Entfernung bis zu diesem Zielort ermittelt wurden. In der mittigen Zeile ist jeweils die ermittelte Ankunftszeit respektive die Zeitdifferenz zu einer Basis-Ankunftszeit angegeben, in der rechten Spalte jeweils der Kraftstoffverbrauch respektive der Verbrauchsdifferenz zu dem Basisverbrauch.

Die Ermittlung der Ankunftszeit und des Kraftstoffverbrauchs erfolgt gemäß Fig. 2a unter Zugrundelegung einer ersten Geschwindigkeitsinformation von 110 km/h, die als Basisinformation optisch hervorgehoben dargestellt wird.

Diese erste Geschwindigkeitsinformation kann z.B. anhand der erfassten Ist-Geschwindigkeiten innerhalb der zurückliegenden letzten Minute ermittelt werden, oder es wird die direkt erfasste Ist-Geschwindigkeit verwendet. Unter Nutzung der Streckeninformationen aus dem Speichermedium 6 des Navigationssystems 5 wird sodann in an sich bekannter Weise die Ankunftszeit ermittelt, die bei einer Durchschnittsgeschwindigkeit von 110 km/h zu 16:45 Uhr ermittelt wurde. Der gesamte Kraftstoffverbrauch bis zur Ankunft am Zielort beträgt im gezeigten Beispiel 35,1 l, diesem Ermittlungswert liegt die gesamte Entfernung von mehreren 100 km bis zum Zielort zugrunde.

Die Einrichtung 2 errechnet jedoch nicht nur die Ankunftszeit und den Kraftstoffverbrauchswert bezogen auf die erste Geschwindigkeitsinformation von 110 km/h, sondern auch bezüglich dreier weiterer zweiter Geschwindigkeitsinformationen, die größer sind als 110 km/h in Intervallen von jeweils 10 km/h, sowie zu drei weiteren zweiten Geschwindigkeitsinformationen, die in Intervallen von 10 km/h jeweils niedriger sind als die 110 km/h. Ermittelt werden jeweils die Zeitdifferenz, die sich in der Ankunftszeit unter Zugrundelegung der jeweils weiteren zweiten durchschnittlichen Geschwindigkeitsinformation im Vergleich zur Basis-Ankunftszeit, hier von 16:45 Uhr, ergibt. In entsprechender Weise wird der jeweilige Kraftstoffmehr- oder -minderverbrauch, also die Verbrauchsdifferenz, unter Zugrundelegung der jeweils höheren/niedrigeren Geschwindigkeit bezogen auf den Basis-Kraftstoffverbrauch bei einer Geschwindigkeit von 110 km/h ermittelt und angezeigt.

Wie Fig. 2a zeigt, werden die Ermittlungsergebnisse neben denen zur Geschwindigkeit von 110 km/h zur Geschwindigkeitsinformation von 100 km/h und 120 km/h ermittelt und ausgegeben. Bei einer Erniedrigung der Geschwindigkeit auf 100 km/h verlängert sich die Ankunftszeit um 24 Minuten, während der Kraftstoffverbrauch um 2,3 l abnimmt. Eine Erhöhung um 10 km/h der Durchschnittsgeschwindigkeit auf 120 km/h führt zwar zu einer um 20 Minuten früher liegenden Ankunftszeit, verbunden hiermit ist jedoch hier ein um 2,2 I erhöhter Kraftstoffverbrauch.

Wie Fig. 2a zeigt, sind hier lediglich drei Informationszeilen zu den Geschwindigkeitsinformationen 100 km/h, 110 km/h und 120 km/h dargestellt. Wie ausgeführt, werden jedoch jeweils drei höhere und drei niedrigere Geschwindigkeitsinformationen errechnet. Der Fahrer kann nun, wenn er weitere Informationen als nur die in Fig. 2a dargestellten ansehen möchte, über das Betätigungselement 9, z.B. ein Scrollrad, zu weiteren Menüseiten "blättern". Im gezeigten Beispiel hat er den in Fig. 2a gezeigten, nach unten gerichteten Anwahlpfeil angewählt, respektive das Scrollrad nach unten gedreht. Es werden ihm sodann die Informationen zur Geschwindigkeitsinformation von 100 km/h sowie die weiteren, bisher nicht gezeigten Ermittlungsergebnisse zu den Geschwindigkeitsinformationen von 90 km/h und 80 km/h ausgegeben. Reduziert der Fahrer - siehe Fig. 2b - die Geschwindigkeit ausgehend von 110 km/h auf 90 km/h, verlängert sich die Ankunftszeit deutlich um 54 Minuten, gleichzeitig sinkt jedoch der Kraftstoffverbrauch um 4,5 I. Eine weitere Verringerung der Durchschnittsgeschwindigkeit auf 80 km/h führt zu einer Zeitdifferenz von 1,32 h, der Kraftstoffverbrauch sinkt um 5,9 I.

In entsprechender Weise kann sich der Fahrer auch die Ermittlungsergebnisse zu höheren Geschwindigkeitsinformationen anzeigen lassen. Hierzu dreht er das Scrollrad ausgehend von Fig. 2a nach oben. Er erhält sodann die Ermittlungsinformationen zu der bereits angezeigten weiteren Geschwindigkeitsinformationen von 120 km/h angezeigt, darüber hinaus auch die zu den Geschwindigkeitsinformationen von 130 km/h und 140 km/h. Ersichtlich reduziert sich die Ankunftszeit um 37 Minuten bei einer Geschwindigkeit von 130 km/h, der Kraftstoffverbrauch nimmt jedoch insgesamt um 5,7 l zu. Eine noch frühere Ankunftszeit wird bei 140 km/h Durchschnittsgeschwindigkeit erreicht, der Fahrer wäre um 52 Minuten früher am Ziel, hiermit ist jedoch ein Mehrverbrauch von 10 I verbunden.

Der Fahrer erhält folglich sehr detailliert und aussagekräftige Informationen dahingehend, wie eine Geschwindigkeitsvariation sich auf die Ankunftszeit sowie den Kraftstoffverbrauch auswirkt, so dass er genau erkennen kann, mit welchem Kraftstoffmehrverbrauch eine höhere Fahrgeschwindigkeit verbunden ist, respektive welchen Zeitvorteil er damit verbindet, und welche Verspätung einzukalkulieren ist, wenn er die Geschwindigkeit reduziert, verbunden mit einer entsprechenden Verbrauchsminderung. Diese Funktionalität der Einrichtung 2 ist insbesondere bei Fahrten auf Überlandstraßen und Autobahnen zweckmäßig und bietet dem Fahrer eine hohe Informationsvielfalt und -tiefe.

Denkbar wäre es auch, dass der Fahrer an der Anzeigeeinrichtung 3 nur einen Geschwindigkeitswert und die dazugehörigen Ermittlungsinformationen angezeigt bekommt, im gezeigten Beispiel also nur die für 110 km/h, während er die anderen Informationen, so er dies wünscht, über das Betätigungselement 9 in Form des Scrollrads oder dergleichen anwählen kann.

Weiterhin ist anstelle des Einsatzes eines Navigationssystems zur Definition des Zielorts, wie in den Figuren 2a - 2c dargestellt, eine Erfindungsausgestaltung auch dergestalt möglich, dass das Navigationssystem inaktiv ist, dass also kein Zielort definiert ist. In diesem Fall errechnet die Einrichtung 2 die entsprechenden Parameter unter Zugrundelegung einer definierten Entfernung von z.B. 100 km. Es wird dann nicht die Ankunftszeit ausgegeben, sondern letztlich die Fahrdauer für die festen 100 km sowie der entsprechende Kraftstoffverbrauch bei den entsprechenden zugrunde gelegten Geschwindigkeitsinformationen. Während bei aktivem Navigationssystem und Eingabe eines Zielorts die entsprechenden Werte selbstverständlich mit zunehmender Annäherung an den Zielort abnehmen respektive variieren, ist bei Zugrundelegung von konstant 100 km Entfernung und Beibehaltung der Reisegeschwindigkeit letztlich kaum eine Variation hinsichtlich der errechneten und ausgegebenen Informationen gegeben.

## Patentansprüche

1. Kraftfahrzeug umfassend eine Einrichtung zur Ermittlung der Ankunftszeit an einem oder der Fahrdauer bis zu einem eine bekannte Entfernung entfernten Ort unter Berücksichtigung wenigstens einer Geschwindigkeitsinformation und der Entfernung sowie zur Ausgabe an einer Anzeigeeinrichtung,
**dadurch gekennzeichnet,**
**dass** die Einrichtung (2) für eine Strecke zur Ermittlung und Ausgabe wenigstens einer weiteren Ankunftszeit oder Fahrdauer oder der Zeitdifferenz unter Berücksichtigung wenigstens einer weiteren, zur ersten Geschwindigkeitsinformation unterschiedlichen Geschwindigkeitsinformation sowie zur Ermittlung und Ausgabe des Kraftstoffverbrauchs oder der Verbrauchsdifferenz zum Zurücklegen der Entfernung jeweils unter Berücksichtigung der ersten und der zweiten Geschwindigkeitsinformation ausgebildet ist.

2. Kraftfahrzeug nach Anspruch 1,
**dadurch gekennzeichnet,**
**dass** die Einrichtung (2) zur Ermittlung und Ausgabe wenigstens einer, vorzugsweise dreier, weiterer Ankunftszeiten oder Fahrdauern oder Zeitdifferenzen unter Berücksichtigung einer, vorzugsweise dreier, weiterer Geschwindigkeitsinformationen, die höher als die erste Geschwindigkeitsinformation sind, sowie zur Ermittlung und Ausgabe wenigstens einer, vorzugsweise dreier, weiterer Ankunftszeiten oder Fahrdauern oder Zeitdifferenzen unter Berücksichtigung einer, vorzugsweise dreier, weiterer Geschwindigkeitsinformationen, die niedriger als die erste Geschwindigkeitsinformation sind, ausgebildet ist.

3. Kraftfahrzeug nach Anspruch 1 oder 2,
**dadurch gekennzeichnet,**
**dass** als Entfernung eine vorbestimmte Entfernung, insbesondere 100 km, berücksichtigt wird, oder dass bei gegebener Zieleingabe in ein Navigationssystem (5) die Entfernung zum Zielort berücksichtigt wird.

4. Kraftfahrzeug nach einem der vorangehenden Ansprüche,
**dadurch gekennzeichnet,**
**dass** als erste Geschwindigkeitsinformation die Ist-Geschwindigkeit oder ein ausgehend von dieser gerundeter Geschwindigkeitswert berücksichtigt wird, und das der oder jeder weitere berücksichtige Geschwindigkeitswert einen vorbestimmten Wert, insbesondere 10 km/h, größer oder kleiner ist.

5. Kraftfahrzeug nach einem der vorangehenden Ansprüche,
**dadurch gekennzeichnet,**
**dass** die erste Geschwindigkeitsinformation anhand der innerhalb eines zurückliegenden vorbestimmten Zeitintervalls, insbesondere einer Minute, erfassten Ist-Geschwindigkeiten ermittelbar ist, insbesondere als Durchschnittsgeschwindigkeit.

6. Kraftfahrzeug nach einem der vorangehenden Ansprüche,
**dadurch gekennzeichnet,**
**dass** unabhängig vom Betriebsmodus eines vorhandenen Navigationssystems (5) Informationen betreffend die Fahrstrecke, die einem Streckendatenspeicher (6) des Navigationssystems (5) entnehmbar sind oder die in Form von von extern übertragenen Daten vorliegen, seitens der Einrichtung berücksichtigbar sind.

7. Kraftfahrzeug nach einem der vorangehenden Ansprüche,
**dadurch gekennzeichnet,**
**dass** unabhängig vom Betriebsmodus eines vorhandenen Navigationssystems (5) nur solche weiteren Geschwindigkeitsinformationen berücksichtigbar sind, die zulässigerweise auf der befahrenen Straße gefahren werden dürfen.

8. Kraftfahrzeug nach einem der vorangehenden Ansprüche,
**dadurch gekennzeichnet,**
**dass** an der Anzeigeeinrichtung (3) die erste Ankunftszeit oder Fahrdauer sowie wenigstens eine weitere Ankunftszeit oder Fahrdauer oder Zeitdifferenz gleichzeitig ausgebbar ist, wobei die erste Ankunftszeit oder Fahrdauer optisch kenntlich gemacht ist.

9. Kraftfahrzeug nach einem der vorangehenden Ansprüche,
**dadurch gekennzeichnet,**
**dass** seitens des Fahrers ein Kraftstoffverbrauchswert über ein Eingabemittel eingebbar ist und die Einrichtung zur Ermittlung und Ausgabe eines den Kraftstoffverbrauchswert erreichenden Geschwindigkeitswerts unter Berücksichtigung wenigstens eines Betriebsparameters des Kraftfahrzeugs ausgebildet ist.

## Claims

1. Motor vehicle comprising a device for determining the arrival time at a location which is a known distance away, or the journey duration to said location, taking into account at least one speed information item and the distance, and for the purpose of outputting on a display device,
**characterized**
**in that** the device (2) is designed for a route for determining and outputting at least one further arrival time or journey duration or the time difference taking into account at least one further speed information item which is different from the first speed information item, and for determining and outputting the fuel consumption or the consumption difference in order to travel the distance taking into account in each case the first and second speed information items.

2. Motor vehicle according to Claim 1,
**characterized**
**in that** the device (2) is designed for determining and outputting at least one, preferably three, further arrival times or journey durations or time differences taking into account one, preferably three, further speed information items which are higher than the first speed information item, and for determining and outputting at least one, preferably three, further arrival times or journey durations or time differences taking into account one, preferably three, further speed information items which are lower than the first speed information item.

3. Motor vehicle according to Claim 1 or 2,
**characterized**
**in that** a predetermined distance, in particular 100 km, is taken into account as a distance, or in that the distance from the destination location is taken into account for a given destination input into a navigation system (5).

4. Motor vehicle according to one of the preceding claims,
**characterized**
**in that** the actual speed or a speed value which is rounded on the basis thereof is taken into account as a first speed information item, and in that the further speed value which is taken into account, or every further speed value which is taken into account, is larger or smaller by a predetermined value, in particular 10 km/h.

5. Motor vehicle according to one of the preceding claims,
**characterized**
**in that** the first speed information item can be determined with reference to the actual speeds detected within a preceding predetermined time interval, in particular a minute, it being possible to determine said first speed information item in particular as an average speed.

6. Motor vehicle according to one of the preceding claims,
**characterized**
**in that** information relating to the distance travelled, which can be obtained from a route data memory (6) of the navigation system (5) or which is present in the form of data transmitted from the outside, can be taken into account by the device independently of the operating mode of a navigation system (5) which is present.

7. Motor vehicle according to one of the preceding claims,
**characterized**
only further speed information items which can be reliably implemented on the road being travelled on are taken into account independently of the operating mode of a navigation system (5) which is present.

8. Motor vehicle according to one of the preceding claims,
**characterized**
**in that** the first arrival time or journey duration and at least one further arrival time or journey duration or time difference can be output simultaneously on the display device (3), wherein the first arrival time or journey duration is indicated visually.

9. Motor vehicle according to one of the preceding claims,
**characterized**
**in that** a fuel consumption value can be input by the driver using an input means, and the device is designed for determining and outputting a speed value which reaches the fuel consumption value, taking into account at least one operating parameter of the motor vehicle.

## Revendications

1. Véhicule automobile comprenant un dispositif pour déterminer l'heure d'arrivée à un lieu éloigné d'une distance connue ou la durée de déplacement jusqu'à celui-ci en tenant compte d'au moins une information de vitesse et de la distance ainsi que pour la diffusion par un dispositif d'affichage,
**caractérisé en ce**
**que** pendant un trajet, le dispositif (2) est configuré pour déterminer et diffuser au moins une heure d'arrivée ou une durée de déplacement ou la différence de temps supplémentaire en tenant compte d'au moins une information de vitesse supplémentaire, différente de la première information de vitesse, ainsi que pour déterminer et diffuser la consommation de carburant ou la différence de consommation pour parcourir la distance à chaque fois en tenant compte de la première et de la deuxième information de vitesse.

2. Véhicule automobile selon la revendication 1,
**caractérisé en ce**
**que** le dispositif (2) est configuré pour déterminer et diffuser au moins une, de préférence trois heures d'arrivée ou durées de déplacement ou différences de temps supplémentaires en tenant compte d'une, de préférence de trois informations de vitesse supplémentaires, lesquelles sont supérieures à la première information de vitesse, ainsi que pour déterminer et diffuser au moins une, de préférence trois heures d'arrivée ou durées de déplacement ou différences de temps supplémentaires en tenant compte d'une, de préférence de trois informations de vitesse supplémentaires, lesquelles sont inférieures à la première information de vitesse.

3. Véhicule automobile selon la revendication 1 ou 2, **caractérisé en ce que** la distance prise en compte est une distance prédéfinie, notamment de 100 km, ou **en ce qu'**avec une saisie de destination donnée dans un système de navigation (5), la distance jusqu'au lieu de destination est prise en compte.

4. Véhicule automobile selon l'une des revendications précédentes, **caractérisé en ce que** la première information de vitesse prise en compte est la vitesse réelle ou une valeur de vitesse arrondie à partir de celle-ci et **en ce que** la ou chaque valeur de vitesse supplémentaire prise en compte est supérieure ou inférieure d'une valeur prédéfinie, notamment de 10 km/h.

5. Véhicule automobile selon l'une des revendications précédentes, **caractérisé en ce que** la première information de vitesse peut être déterminée au moyen des vitesses réelles détectées au sein d'un intervalle de temps prédéfini écoulé, notamment d'une minute, notamment sous la forme d'une vitesse moyenne.

6. Véhicule automobile selon l'une des revendications précédentes, **caractérisé en ce que** des informations concernant le trajet à parcourir peuvent être prises en compte du côté du dispositif, lesquelles peuvent être prélevées dans une mémoire de données de trajet (6) d'un système de navigation (5) ou sont présentes sous la forme de données externes transmises, et ce indépendamment du mode de fonctionnement du système de navigation (5) présent.

7. Véhicule automobile selon l'une des revendications précédentes, **caractérisé en ce qu'**indépendamment du mode de fonctionnement d'un système de navigation (5) présent, seules peuvent être prises en compte les informations de vitesse supplémentaires qui correspondent à une autorisation de circulation sur la route parcourue.

8. Véhicule automobile selon l'une des revendications précédentes, **caractérisé en ce que** la première heure d'arrivée ou la durée du déplacement ainsi qu'au moins une heure d'arrivée ou une durée de déplacement ou une différence de temps supplémentaire peuvent être diffusées simultanément sur le dispositif d'affichage (3), la première heure d'arrivée ou la durée du déplacement étant rendue optiquement reconnaissable.

9. Véhicule automobile selon l'une des revendications précédentes, **caractérisé en ce que** du côté du conducteur, il est possible de saisir une valeur de consommation de carburant par le biais de moyens de saisie et le dispositif est configuré pour déterminer et délivrer une valeur de la vitesse atteignant la valeur de la consommation de carburant en tenant compte d'au moins un paramètre de fonctionnement du véhicule automobile.
